# EUROPÄISCHE PATENTSCHRIFT

(11) **EP 0 423 074 B1**
(45) Veröffentlichungstag und Bekanntmachung des Hinweises auf die Patenterteilung: **26.04.1995**
(21) Anmeldenummer: 90810766.7
(22) Anmeldetag: 05.10.1990
(51) Int. Cl.: B32B 31/06, B32B 13/12, B28B 19/00

(54) **Schwer entflammbare bis unbrennbare Verbundplatte**
Fire-resistant or fireproof laminate
Stratifié résistant au feu ou incombustible

(30) Priorität: 10.10.1989 CH 3688/89
(43) Veröffentlichungstag der Anmeldung: 17.04.1991
(73) Patentinhaber: ALUSUISSE-LONZA SERVICES AG, 8034 Zürich (CH)
(72) Erfinder: Schlatter, Reinhard, CH-8200 Schaffhausen (CH); Ehrat, Rainer, CH-8207 Schaffhausen (CH); Müller, Peter, CH-8240 Thayngen (CH); Kübler, Paul, CH-8212 Neuhausen (CH); Hödl, Otto, CH-8212 Neuhausen (CH)

(56) Entgegenhaltungen:
- DE-C- 559 483
- FR-A- 1 287 884
- FR-A- 1 582 284
- FR-A- 2 629 117
- GB-A- 2 029 319

## Beschreibung

Die Erfindung bezieht sich auf ein Verfahren zur Herstellung einer schwer entflammbaren bis unbrennbaren Verbundplatte mit einer nicht extrudierbaren Kernmischung aus einem schüttfähigen, unbrennbaren Füllmaterial und einem Bindemittel, und beidseits mit dein Kern elastisch verklebten Deckbändern. Weiter betrifft die Erfindung eine Vorrichtung zur Durchführung des Verfahren.

Es sind Verbundplatten bekannt, bei welchen metallische oder nicht metallische Deckbänder durch vollflächige Verklebung mit Kernschichten vorwiegend anorgani scher Natur mit Hilfe eines Bindemittels verbunden sind. Die Kernmaterialien können zwar anorganisch und unbrennbar sein, doch sind sie wegen der fehlenden Elastizität meist nicht in der Lage, die aus mechanischen Beanspruchungen oder aus thermischen Dehnungen der Deckschichten resultierenden Deformationen aufzunehmen. Solche Verbundplatten erleiden daher verhältnismässig oft einen Sprödbruch oder eine Delamination. Weiter sind Verbundplatten mit einer Kernschicht vorwiegend anorganischer Natur meist feuchtigkeitsempflindlich oder wasseraufsaugend, wodurch metallische Deckschichten korrodieren können, insbesondere wenn alkalisch reagierende Substanzen verwendet werden.

Enthalten anorganische Kernmaterialien mineralische Bestandteile hoher Härte oder Asbestfasern, ist eine spanabhebende Bearbeitung nur mit speziellen Werkzeugen möglich. Weiter wird die mechanische Bearbeitung durch die Entwicklung toxikologisch bedenklicher Stäube weiter erschwert.

Materialien mit geringen Anteilen organischer Substanzen, beispielsweise Klebefolien, können nach zahlreichen nationalen Normen in die Klasse der unbrennbaren oder zumindest schwer entflammbaren Baustoffe bzw. Bauteile eingestuft werden.

Kernmaterialien aus organischen oder vorwiegend organischen Stoffen dagegen erfüllen die Anforderung der Schwerentflammbarkeit bis Unbrennbarkeit nicht. Bei der Einwirkung von Feuer oder sonstigen hohen Temperaturen werden durch die Zersetzung organischer Bestandteile grosse Mengen brennbarer Gase abgespalten.

Es ist bekannt, die Brennbarkeit organischer Substanzen, wie Kunstharzen, durch die Einarbeitung möglichst grosser Mengen von z.B. Aluminiumtrihydroxid stark zu reduzieren. Bei erhöhter Temperatur wird chemisch gebundenes Wasser frei und entfaltet einen wirksamen Löscheffekt.

In der DE-C3 2842858 wird eine Verbundplatte mit zwei Deckblechen und einem Kern aus einer Mischung eines körnigen Füllmaterials und einem üblichen Bindemittel beschrieben, welcher einen hohen Anteil von körnigen Füllstoff, insbesondere von Aluminiumtrihydroxid, und einen geringeren Anteil an Bindemittel enthält. Der Bindemittelgehalt nimmt von den Grenzflächen von den Deckblechen nach der Kernmitte ab, wodurch in zahlreichen Ländern eine Einstufung in die Klasse von unbrennbaren Bauteilen möglich ist.

Eine Kernmischung mit einem anorganischen Füllstoff ist nicht extrudierbar, weshalb die Herstellung entsprechender Verbundplatten taktweise erfolgt. Vorerst wird die untere, mit einem Kleber beschichtete Deckschicht aufgelegt, dann das Kernmaterial eingestreut oder sonstwie aufgetragen. Schliesslich wird die obere, mit einem Kleber beschichtete Deckschicht aufgel egt, und die Verbundplatte durch Erwärmen, Pressen und Abkühlen in die endgültige Form gebracht.

Auch bei sorgfältiger Arbeitsweise entstehen keine gleichmässigen, porenfreien Kleberschichten, was den Korrosionsschutz vermindert. Weiter kommen Anlageteile, welche der Schichtbildung dienen, mit anhaftenden Komponenten in Berührung, wodurch die Schicht unregelmässig ausgebildet wird.

Schliesslich können keine Kleberschichten mit ausreichend hoher Elastizität zur Verbindung von metallischen Deckschichten mit mineralisch harten Kernschichten aufgetragen werden.

Der vorliegenden Erfindung liegt die Aufgabe zugrunde, ein Verfahren und eine Vorrichtung zur Durchführung des Verfahrens der eingangs genannten Art zu schaffen, welche eine wesentlich einfachere und wirtschaftlichere Herstellung von schwer entfl ammbaren bis unbrennbaren Verbundplatten, mit verbesserten Eigenschaften bezüglich der Korrosionsfestigkeit und Elastizität der Verbindung der Deckschichten mit harten Kernschichten, erlauben.

In bezug auf das Verfahren wird die Aufgabe erfindungsgemäss dadurch gelöst, dass zu einer kontinuierlichen Herstellung der Verbundplatte in einem Arbeitsgang die Kernmischung auf eine abgestützt einlaufende, elastische untere Klebefolie geschüttet und dort ein sich über die ganze Breite erstreckender Schüttkegel gebildet wird, zwischen der unteren und einer ebenfalls abgestützt einlaufenden, elastischen oberen Klebefolie kontinuierlich und gleichmässig Material der Kernmischung durch einen Keil spalt gezogen und dort erstmals verdichtet und auf Dicke kalibriert wird, die die vorverdichtete Kernmischung enthaltenden Klebefolien mit kontinuierlich zugeführten Deckbändern verklebt werden, und der Verbund unter weiterer Verdichtung gepresst, erwärmt, gekühlt und auf das Endmass der Verbundplatte abgelängt wird.

Das erfindungsgemässe Verfahren erlaubt eine kontinuierliche Herstellung von Verbundplatten mit einer nicht extrudierbaren Kernmischung, was einen grossen Fortschritt bezüglich der Produktivität, aber auch der Qualität darstellt. So können schüttfähige bis schwerfliessende, mehr oder weniger klebrige Kernmischungen aus beispielsweise 60 - 95 Gew.-% anorganischen Füllstoffen und 5 - 40 Gew.-% Bindemittel kontinuierlich auf eine von der unteren Klebefolie gebildete, laufende Fläche gegeben werden. Zusammen mit der oberen laufenden Klebefolie erzeugt diese eine genau kalibrierte Schichtdicke bei gleichmässiger Dichte. Die ausgebreitete Kernschicht zwischen den Klebstoffschichten kann zwischen Deckbänder eingebracht werden. Dadurch entsteht eine elastische Verbindung zwischen dem nach erfolgter Aushärtung harten Kern und den Deckbändern, wobei die elastische Verbindung gleichzeitig mit der Kernhärtung erzielt werden kann. Dabei wird die kalibrierte Kernschicht zwischen zwei Kleberfolien, zusammen mit den von oben und unten zugeführten Deckschichten, kontinuierlich in eine Durchlaufpresse mit Heiz- und Kühlzone geleitet, wobei gleichzeitig sowohl die Kleberfolie als auch der Kern aufgeschmolzen bzw. ausgehärtet, und unter dein Druck der Presse die Kernmischung weiter verdichtet und eine optimale Verbundhaftung zwischen allen Schichten erreicht wird.

Vor dem Beladen mit der Kernmischung bzw. vor dem Einzug in den Keilspalt werden die Klebefolien vorzugsweise über eine Bandzugregelung bekannter Bauart geführt. Diese erlaubt die Erzeugung einer konstanten Folienspannung, was für den gleichmässigen Einzug der Kernmischung von wesentlicher Bedeutung ist.

Nach einer besonderen Ausführungsform der Erfindung werden die Deckbänder gleichzeitig, d.h. vor dem Keilspalt, mit den Klebebändern zugeführt. Die Deckbänder können in diesen Fall bereits während der Zugabe der Kernmischung auf die untere Klebefolie und während des Einziehens der Kernmischung zwischen den Klebefolien eine gewisse Schutzwirkung entfalten.

Die Zufuhr der Kernmischung ist vorzugsweise derart geregelt, dass das verbrauchte Material stets durch neues ersetzt wird, und der sich über die ganze Breite erstreckende Schüttkegel konstant bleibt.

Als feuerhemmender, schüttfähiger Füllstoff der Kernmischung, welcher vorzugsweise 60 - 95 Gew.-% ausmacht, eignen sich insbesondere Aluminiumtrihydroxid oder Magnesiumhydratcarbonat, welche beim Erwärmen chemisch gebundenes Wasser und/oder Kohlendioxid abspalten, oder für chlorhaltige Kunststoffe Antimonoxid.

Als organisches Bindemittel , dessen Anteil an der Kernmischung vorzugsweise 5 - 40 Gew.-% beträgt, können sowohl Duroplasten als auch Thermoplasten verwendet werden. Duroplasten sind nach der Aushärtung sprödhart oder elastisch, Thermoplasten verlieren nach dem Aushärten die Elastizität nicht. Als duroplastische Bindemittel werden vorzugsweise Phenol-, Polyurethan- oder Polyisocyanuratharze eingesetzt, welche eine niedrige Brennbarkeit und Rauchentwicklung haben. Beim Einsatz von thermoplastischen Bindemitteln wird Polyäthylen bevorzugt.

Als anorganische Bindemittel können Zementmilch, Gips oder Wasserglas eingesetzt werden. Mit einem anorganischen Bindemittel sind die Verbundplatten mit metallischen Deckbändern trotz der thermoplastischen Klebefolien quasi-unbrennbar.

Als Deckbänder eignen sich in erster Linie Metalle, z.B. Aluminium, Aluminiumlegierungen oder Stahl

Die auf der unteren Klebefolie aufgeschüttete Kernmischung hat einen Schüttwinkel , der unter anderem von der Kornbeschaffenheit und Korngrösse des Füllmaterials und des homogen eingemischten Bindemittels abhängt. Bei einer Kernmischung mit kleinerem Schüttwinkel oder fliessenden pastösen Eigenschaften wird mit einer kleineren ersten Verdichtung, welche im Keilspalt erfolgt, gearbeitet. Bei einer Kernmischung mit grösserem Schüttwinkel wird auch mit grösserer erster Verdichtung gearbeitet. Die kleinere Verdichtung wird durch einen steileren Einlaufwinkel in den Keilspalt und/oder wenigstens einen kleinen Radius von dessen Begrenzungsfläche/n erzeugt, die grössere Verdichtung mittels eines flacheren Einlaufwinkels in den Keilspalt und/oder wenigstens einen grösseren Radius von dessen Begrenzungsfläche/n. Bei kleinem Einlaufwinkel ist die Klemmgefahr höher, insbesondere bei zähen, klebrigen Massen.

In diesem Zusammenhang wird darauf hingewiesen, dass die Kernmischung nach dem Verlassen der Zuführvorrichtung nie mit einem Maschinenteil in direkten Kontakt kommt.

In bezug auf die Vorrichtung zur Durchführung des Verfahrens wird die Aufgabe erfindungsgemäss dadurch gelöst, dass sie - in Laufrichtung der Bänder - je eine Haspel mit der unteren und oberen Klebefolie, je eine Breitstreckwalze und Umlenkrollen für die Klebefolien, eine Einrichtung zum regelmässigen Auftragen der Kernmischung auf die untere Klebefolie, erste Mittel zur Bildung eines einstellbaren Einlaufwinkels und des einstellbaren Keilspaltes zur erstmaligen Verdichtung der zwischen den Klebefolien eingezogenen Kernmischung, zweite Mittel zum Stützen der unteren Klebefolie, bis zu den Verdichtung- bzw. Zugwalzen, und dritte Mittel zum weiteren Pressen und Erwärmen, sowie eine Einrichtung zum Ablängen auf Endmass der Verbundplatte umfasst.

Nach einer ersten bevorzugten Variante sind die ersten Mittel zur Einstellung des Keilspaltes ein drehbarer, in bezug auf den Querschnitt runder, oval er oder drei- bis sechseckiger Rakelbalken, bei eckigen Querschnitten bevorzugt mit an jeder Ecke in Längsrichtung verlaufendem, unterschiedlichem Abrundungsradius, oder ein drehbares Rakelblatt mit wenigstens einer abgerundeten, schmalen Längsseite und ein etwa horizontal angeordneter Rakeltisch. Der Rakelbalken bzw. das Rakelblatt und/oder der Rakeltisch sind höhenverstellbar, die Breite des Keilspaltes also einstellbar. Durch das Schwenken des Rakelbalkens bzw. Rakelblatts kann ein der gewünschten Verdichtung der Kernmischung entsprechender Abrundungsradius und/oder mittels der Steigung der entsprechenden Längsseite der Einlaufwinkel β eingestellt werden. Der Rakelbalken bzw. das Rakelblatt und der Rakeltisch sind in jeder Höhen- und Drehposition so fixierbar, dass sie die beim Einziehen der Kernmischung einwirkenden Kräfte nicht zu verschieben vermögen. Alle Gleitflächen des Rakelbalkens bzw. Rakelblatts und des Rakeltischs für die Klebefolien sind zweckmässig mit einer Gleitschicht überzogen, vorzugsweise mit einer Polytetrafluoräthylenschicht (Teflon).

Nach einer zweiten Variante sind die ersten Mittel zur Einstellung des Keilspaltes eine Anordnung von Lager-, Mitnehmer-, Stütz- und den Keil spalt bildenden, auswechselbaren Dosierrollen. In an sich bekannter Weise sind die Rollen individuell höhen- und seitenverstellbar, so dass die Breite des Keilspalts, der durch den Durchmesser der Dosierrollen vorgegebene Abrundungsradius und der Einlaufwinkel nach Bedarf geändert werden können.

Je eine Rolle des Systems kann einen Antrieb haben, die übrigen Rollen sind durch Kontaktreibung der Rollen antreibbar.

Zweckmässig sind nach dem Keilspalt zwei angetriebene Vorverdichtungswalzen angeordnet, welche die Kernmischung weiter verdichten und vorzugsweise über die Mitnehmerrollen die Lager-, Stütz- und Dosierrollen antreiben.

Die zweiten Mittel zum Stützen der unteren Klebefolie sind eng nebeneinander liegende Lauf- bzw. Stützrollen oder Gleitflächen, welche letztere vorzugsweise mit Polytetrafluoräthylen (Teflon) beschichtet sind.

Die dritten Mittel zum abschliessenden Pressen und Erwärmen, zweckmässig auch zum Halten der Temperatur während eines bestimmten Teils der Durchlaufszeit, und zum Abkühlen sind vorzugsweise als Durchlaufpresse/n, insbesondere als Doppelbandpresse/n, ausgebildet.

Mit dem erfindungsgemässen Verfahren und der Vorrichtung zur Durchführung des Verfahrens können kontinuierlich ausgehärtete Kernschichten mit insbesondere metallischen Deckbändern zu alterungs- und witterungsbeständigen Verbundplatten mit einer Klassierung unbrennbar, quasi nicht brennbar oder schwer entflammbar laminiert werden.

Weiter erlauben das Verfahren und die Vorrichtung
- die unübliche gleichzeitige Verarbeitung und Verbindung von thermoplastischen und duroplastischen Schichten zu Schichtverbunden,
- die unübliche Schichtbildung mit ausreichender Dicken-und Dichtekonstanz durch starke Verdichtung, auch Quetschung genannt, einer nicht plastischen Masse in einem durch einen Einlaufwinkel und wenigstens einen Radius definierten Keilspalt,
- die unübliche witterungsbeständige Verbindung zwischen harten unelastischen Kernschichten und relativ elastischen Metall schichten mit höheren linearen Wärmeausdehnungskoeffizienten als die Kernschichten, und
- den Schutz von metallischen Deckbändern vor Korrosion durch allfällige seitlich eindringende Flüssigkeiten mittels einer durch eine Klebefolie gebildeten porenfreien Schicht.

Die Erfindung wird anhand der in der Zeichnung dargestellten Ausführungsbeispiele, welche auch Gegenstand von abhängigen Patentansprüchen sind, näher erläutert. Es zeigen schematisch:
- Fig. 1 eine Ansicht einer Vorrichtung zur kontinuierichen Herstellung von schwer entflammbaren bis unbrennbaren Verbundplatten,
- Fig. 2 eine vergrösserte Teilansicht einer Variante von Fig. 1,
- Fig. 3 eine Seitenansicht eines Rakelbalkens,
- Fig. 4 eine Seitenansicht eines Rakelblatts,
- Fig. 5 eine vergrösserte Teilansicht einer weiteren Variante von Fig. 1, und
- Fig. 6 einen teilweisen Querschnitt durch eine Verbundplatte.

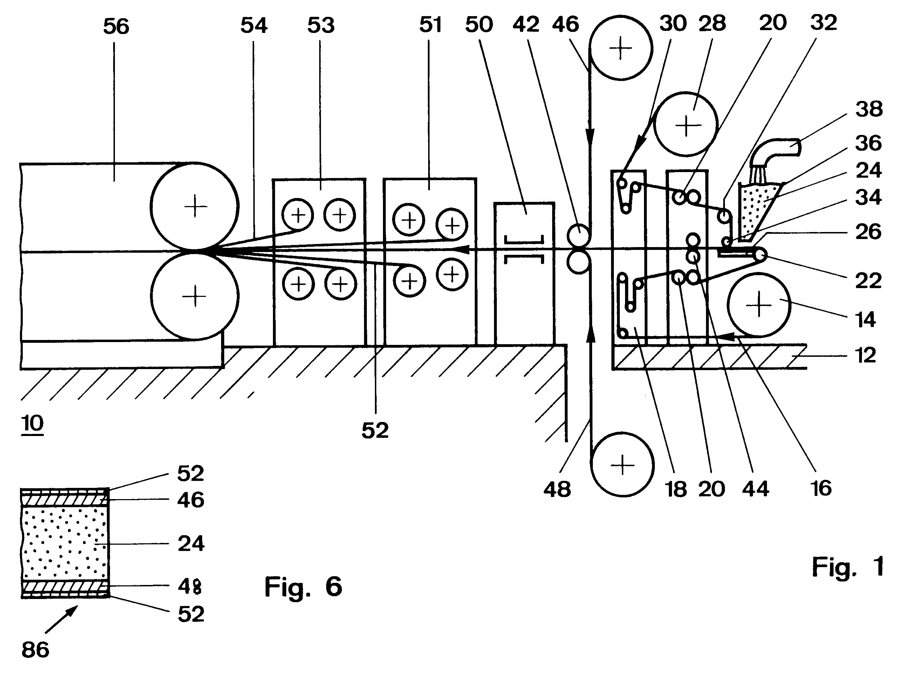

Auf einem Fundament 10 und einer Bodenplatte 12 sind die wesentlichen Bestandteile der in Fig. 1 gezeigten Vorrichtung abgestützt.

Von einer unteren Haspel 14 wird eine untere Klebefolie 16 abgewickelt und über eine Folienzugregelung 18, eine Breitstreckwalze 20 und eine Umlenkrolle 22 in etwa horizontal er Lage in den Bereich der Zufuhr der homogenen Kernmischung 24 geführt. In diesem Bereich liegt die untere Klebefolie 16 im Betrieb gleitend auf einem Rakeltisch 26 auf.

Von einer oberen Haspel 28 wird eine obere Klebefolie 30 abgewickelt und ebenfalls über eine Folienzugregelung 18, eine Breitstreckwalze 20 und eine Umlenkrolle 32 um einen Rakelbalken 34 bzw. um ein Rakelblatt 35 geschlungen. Eine automisch betätigte Dosiervorrichtung 36 entleert kontinuierlich oder in kleinen Portionen Kernmi schung 24 auf die untere Klebefolien 16. Die Dosiervorrichtung 36 wird von einer Zufuhrleitung 38 gespeist.

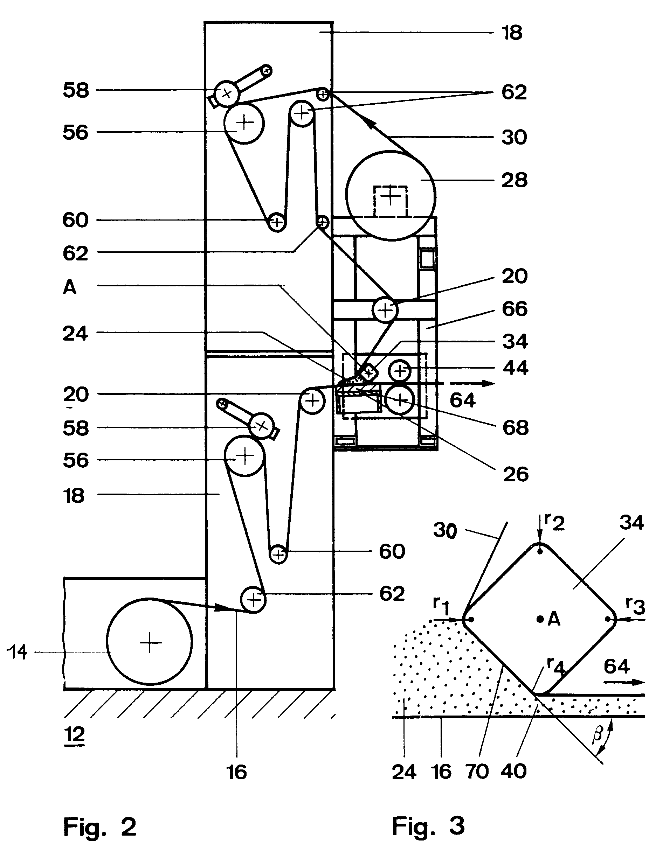

Rakeltisch 36 und Rakelbalken 34 bzw. Rakelblatt 35 begrenzen einen Keilspalt 40 (Fig. 3), welcher einen zwischen der unteren Klebefolie 16 und der oberen Klebefolie 30 liegenden, kalibrierten Einzug für die Kernmischung 24 definiert.

Zwei Zugwalzen 42 ziehen die Klebefolien 16, 30 durch den Keilspalt 40, wobei die schüttfähige Kernmischung 24 mitgezogen und im Keilspalt 40 erstmals verdichtet wird. Eine weitere Verdichtung erfolgt zwischen den Vorverdichtungswalzen 44.

Um die Zugwalzen 42 geschlungen sind ein oberes Deckband 46 und ein unteres Deckband 48, welche auf die Klebefolien 16, mit der Kernmischung 24 gedrückt werden, wobei die Kernmischung ein weiteres Mal verdichtet wird.

Der kontinuierliche Verbund läuft vorerst durch eine Bandvorwärmung 50, dann durch ein Gerüst 51 mit Rollen einer Schutzfolie 52 und ein Gerüst 53 mit Rollen eines Papierbandes 54 zu einer Doppelbandpresse 56. Hier wird der Verbund aus der vorverdichteten Kernmischung 24, den Klebefolien 16, 30, den Deckbändern 46, 48, den Schutzfolien 52 und den Papierbändern 54 gepresst, erwärmt, auf Temperatur gehalten, abgekühlt und schliesslich, nach der Doppelbandpresse 56, auf das Endmass abgelängt. Selbstverständlich können die Deckbänder 46, 48 unbeschichtet bleiben oder nur mit Schutzfolien 52 oder Papierbändern 54 beschichtet werden.

Fig. 2 zeigt die Führung der Klebefolien 16, 30 bis zum Keilspalt 40 (Fig. 3) zwischen dem um die Längsachse A dreh- und höhenverstellbaren Rakelbalken 34 und dem Rakeltisch 36, welcher auch höhenverstellbar und schwenkbar sein kann. Jede der von einer Haspel 14, 28 abgewickelten Klebefolien 16, 30 wird durch eine hier besser sichtbar dargestellte Folienzugregelung 18 geführt. Mittels einer Presswalze 58 wird die Klebefolie 16, 30 auf eine Antriebswalze 56 gedrückt. Der Ausgleich des Bandzuges erfolgt mittels einer Tänzerwalze 60. Im vorliegenden Fall umfasst jede Folienzugregelung 18 noch eine bzw. drei Umlenkrollen 62.

Die zwischen den Klebefolien 16, 30, welche im Schüttbereich der Kernmischung 24 noch keine Klebewirkung entfalten, durch den Keilspalt 40 gezogene und erstmals vorverdichtete Kernmi schung 24 wird zwischen Vorverdichtungswalzen 44 nochmals verdichtet und in Richtung des Pfeils 64 zu den in Fig. 1 gezeigten Anlageteilen weitergeführt.

Der auf dem Gerüst 66 montierte, schwenk- und höhenverstellbare Rakeltisch 26 ist mit rasterförmig angeordneten Druck- und Zugschrauben auf einer Trägerplatte 68 montiert. Mit diesen nicht dargestellten Druck- und Zugschrauben kann die teflonisierte Oberfläche des Rakeltischs 26 gegenüber der formfesten Trägerplatte 68 um einige Zehntelmillimeter verstellt werden. Damit können kleine Unebenheiten auf der Oberfläche des Rakeltischs 26 harmonisch ausgeglichen werden.

Ein im Querschnitt quadratischer, um eine Längsachse A dreh- und höhenverstellbarer Rakelbalken 34 ist in Fig. 3 vergrössert dargestellt. Die obere Klebefolie 30 umschlingt den Rakelbalken und gleitet entlang einer den Einlaufwinkel β bildenden, teflonisierten Seitenfläche 70 des Rakelbalkens 34. Die untere, auf dem in Fig. 3 nicht gezeigten Rakeltisch 26 (Fig. 2) gleitende Folie 16 verläuft horizontal.

Die Längskanten des Rakelbalkens 34 sind mit verschiedenen Radien r₁, r₂, r₃ und r₄ abgerundet, wobei r₁ der kleinste, r₄ der grösste Radius ist.

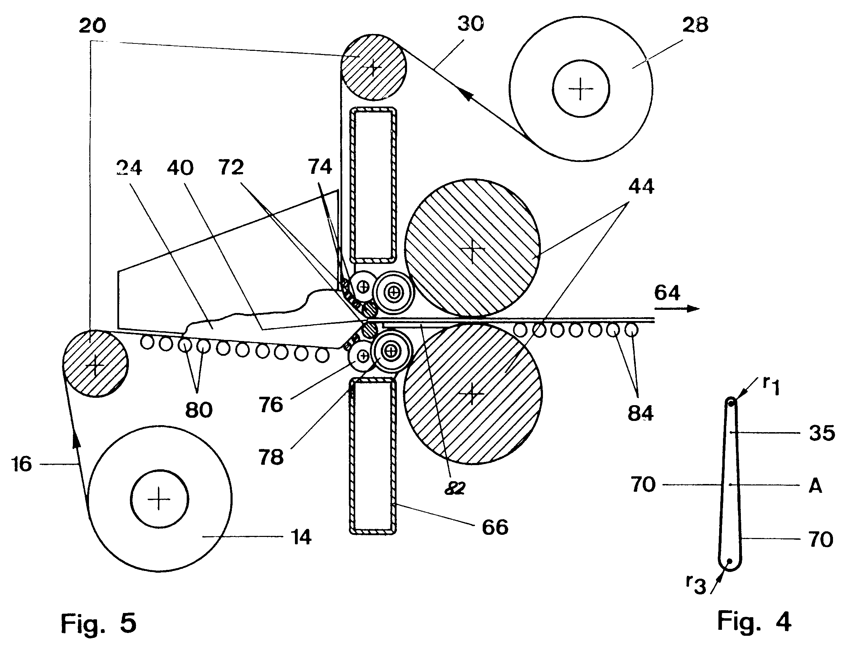

Ein ebenfalls um eine Längsachse A dreh- und höhenverstellbares Rakelblatt 35 ist in Fig. 4 dargestellt. Eine der nicht parallel verlaufenden Seitenflächen 70 bildet bei entsprechend Fig. 3 eingesetztem Rakelblatt 35 den Einlaufwinkel β. Dank der nicht parallelen Seitenflächen 70 sind beim Rakelblatt 35 Abrundungen mit unterschiedlichen Radien r₁, r₃, ausgebildet, welche die gleiche Funktion wie die Abrundungen eines Rakelbalkens ausüben.

Selbstverständlich können in Ausführungsvarianten des Rakelblatts die Seitenflächen 70 auch parallel verlaufen und/oder es kann nur eine Abrundung ausgebildet sein.

Ein Rakel balken 34 ist, als Vollkörper oder starkwandiges Hohlprofil vorliegend, massiver ausgebildet als ein Rakelblatt 35, kann aber ausgeübte Kräfte eher völlig deformationsfrei aufnehmen.

Fig. 5 zeigt eine Variante für den Einzug der Kernmischung 24 mittels der Klebefolien 16, 30. Der Keilspalt 40 wird von zwei Dosierrollen 72 gebildet, zwischen welchen auch die erste Verdichtung der Kernmischung 24 stattfindet. Der Einlaufwinkel β (Fig. 3) wird durch Stützrollen 74 bestimmt. Die untere Klebefolie 16 läuft über zwei Stützrollen 74, die obere Klebefolie 30 über drei.

Lagerrollen 76 dienen dazu, die Dosier- 72 und Stützrollen 74 abzustützen und das von den angetriebenen Vorverdichtungswalzen 44 via Mitnehmerrollen 78 übertragene Drehmoment weiterzugeben.

Der Schüttkegel der automatisiert gleichmässig vorrätigen Kernmischung 24 liegt auf der unteren Klebefolie 16, welche auf eng nebeneinander liegenden Laufrollen 80 abgestützt ist.

Nach dem Keilspalt 40 wird die erstmals verdichtete, zwischen den Klebefolien 16, 30 angeordnete Kernmischung 24 auf einem Gleittisch 82 zwischen die Vorverdichtungswalzen 44 gezogen, wo eine zweite Vorverdichtung stattfindet. Ueber eine zweite Serie von Laufrollen 84 gelangt das Band in Richtung des Pfeils 64 zu den weiteren, in Fig. 1 dargestellten Anlageteilen.

Aus den Fig. 1 bis 5 ist ersichtlich, dass die Kernmischung 24 stets ausschliesslich in Kontakt mit den Klebefolien 16, 30 kommt und keine fest eingebauten Anlageteile berührt. Dies trägt wesentlich zur Betriebssicherheit und einer einfachen Wartung der Vorrichtung bei, die klebrige Kernmischung kann sich nicht auf Walzen- bzw. Rollenoberflächen anlagern.

Eine in Fig. 6 teilweise dargestellte Verbundplatte 86 zeigt die mit zwei Deckbändern 46, 48 elastisch verklebte Kernschicht aus der stark verdichteten, ausgehärteten Kernmischung 24. Die Deckbänder 46, 48 sind mit Schutzfolien 52 beschichtet. Die Klebefolien sind als solche nicht mehr sichtbar.

## Patentansprüche

1. Verfahren zur Herstellung einer schwer entflammbaren bis unbrennbaren Verbundplatte (86) mit einem Kern aus einer nicht extrudierbaren Kernmischung (24) aus einem schüttfähigen, unbrennbaren Fullmaterial und einem Bindemittel, und beidseits mit dem Kern elastisch verklebten Deckbändern (46, 48),
dadurch gekennzeichnet, dass
zu einer kontinuierlichen Herstellung der Verbundplatte (86) in einem Arbeitsgang die Kernmischung (24) auf eine abgestützt einlaufende, elastische untere Klebefolie (16) gesschüttet und dort ein sich über die ganze Breiter der Folie erstreckender Schüttkegel gebildet wird, zwischen der unteren und einer ebenfalls abgestützt einlaufenden, elastischen oberen Klebefolie (30) kontinuierlich und gleichmässig Material der Kernmischung (24) durch einen Keilspalt (40) gezogen und dort erstmals verdichtet und auf Dicke kalibriert wird, die die vorverdichtete Kernmischung (24) enthaltenden Klebefolien (16, 30) mit den kontinuierlich zugeführten Deckbändern (46, 48) verklebt werden, und der Verbund unter weiterer Verdichtung gepresst, erwärmt, gekühlt und auf das Endmass der Verbundplatte (86) abgelängt wird.

2. Verfahren nach Anspruch 1, dadurch gekennzeichnet, dass die abgewickelten Klebefolien (16, 30) zur Erzeugung einer konstanten Folienspannung durch je eine Folienzugregelung (18) geführt werden.

3. Verfahren nach Anspruch 1 oder 2, dadurch gekennzeichnet, dass die Klebefolien (16, 30) und die Deckbänder (46, 48) in einem Durchgang zugeführt werden.

4. Verfahren nach einem der Ansprüche 1 - 3, dadurch gekennzeichnet, dass die vor dem Keilspalt (40) vorrätige Kernmischung (24) automatisch entsprechend dem Verbrauch ausgeglichen wird.

5. Verfahren nach einem der Ansprüche 1 - 4, dadurch gekennzeichnet, dass eine Kernmischung (24) zugegeben wird, welche aus 60 - 95 Gew.-% anorganischen Füllstoffen und 5 - 40 Gew.-% eines organischen oder anorganischen Bindemittels besteht, vorzugsweise in körniger oder pastöser Form, und Deckbänder (46, 48) aus einem Metall oder einem schwer entflammbaren Kunststoff aufgeklebt werden.

6. Verfahren nach einem der Ansprüche 1 - 5, dadurch gekennzeichnet, dass bei einer Kernmischung (24) mit kleinem Schüttwinkel oder fliessenden pastösen Eigenschaften mit kleiner erster Verdichtung und bei einer Kernmischung mit grösserem Schüttwinkel mit grösserer erster Verdichtung gearbeitet wird, wobei die kleinere Verdichtung mittels eines steileren Einlaufwinkels (β) und/oder wenigstens eines kleineren Radius (r_{1,2}) der Begrenzungsfläche/n des Keilspalts, die grössere Verdichtung mittels eines flacheren Einlaufwinkels (β) und/oder wenigstens eines grösseren Radius (r_{3,4}) der Begrenzungsfläche/n des Keilspalts (40) erzeugt wird.

7. Vorrichtung zur Durchführung des Verfahrens nach einem der Ansprüche 1 - 6, dadurch gekennzeichnet, dass sie, in Laufrichtung (64) der Bänder, je eine Haspel (14, 28) mit der unteren und der oberen Klebefolie (16, 30), je eine Breitstreckwalze (20) und Umlenkrollen (22, 62) für die Klebefolien (16, 30), eine Einrichtung (36) zum regelmässigen Auftragen der Kernmischung (24) auf die untere Klebefolie (16), erste Mittel zur Bildung eines einstellbaren Einlaufwinkels (β) und des verstellbaren Keilspaltes (40) zur erstmaligen Verdichtung der zwischen den Klebefolien (16, 30) eingezogenen Kernmischung (24), zweite Mittel zum Stützen der unteren Klebefolie (16), bis zu den Verdichtungs- bzw. Zugwalzen (42), und dritte Mittel zum abschliessenden Pressen und Erwärmen, sowie eine Einrichtung zum Ablängen auf Endmass der Verbundplatte (86) umfasst.

8. Vorrichtung nach Anspruch 7, dadurch gekennzeichnet, dass die ersten Mittel zur Einstellung des Keilspaltes (40) ein drehbarer, in bezug auf den Querschnitt runder, oval er oder drei- bis sechseckiger Rakelbalken (34), bei eckigen Querschnitten vorzugsweise mit an jeder Längskante verlaufendem, unterschiedlichem Abrundungsradius (r), oder ein drehbares Rakelblatt (35) mit wenigstens einer abgerundeten schmalen Längsseite und ein etwa horizontal angeordneter Rakeltisch (26) sind, wobei der Rakelbalken (34) bzw. das Rakelblatt (35) und/oder der Rakeltisch (26), höhenverstellbar und drehbar ausgebildet, in jeder Position fixierbar sind, und alle Gleitflächen für die Klebefolien (16, 30) von Rakelbalken (34) bzw. Rakelblatt (35) und Rakeltisch (26) mit einer Gleitschicht überzogen sind, vorzugsweise mit Tetrafluoräthylen.

9. Vorrichtung nach Anspruch 7, dadurch gekennzeichnet, dass die ersten Mittel zur Einstellung des Einlaufwinkels (β) und des Keil spaltes (40) eine Anordnung von Lager- (76), Mitnehmer- (78), Stütz- (74) und den Keilspalt (40) bildenden, auswechselbaren Dosierrollen (72) sind, welche Rollen individuell hörten- und seitenverstellbar und vorzugsweise durch Kontakt untereinander antreibbar sind.

10. Vorrichtung nach Anspruch 9, dadurch gekennzeichnet, dass unmittelbar nach dem Keilspalt (40) zwei angetriebene Vorverdichtungswalzen (44) angeordnet sind, welche die Kernmischung (24) weiter verdichten und vorzugsweise über die nicht- angetriebenen Mitnehmerrollen (78) die Lager- (76), Stütz- (74) und Dosierrollen (72) antreiben.

11. Vorrichtung nach einem der Ansprüche 7 - 10, dadurch gekennzeichnet, dass die zweiten Mittel zum Stützen der unteren Klebefolie (16) eng nebeneinanderliegende Laufrollen (80, 84) und/oder Gleittische (26, 82), vorzugsweise mit Polytetrafluoräthylen beschichtet, sind.

12. Vorrichtung nach einem der Ansprüche 7 - 10, dadurch gekennzeichnet, dass die dritten Mittel zum abschliessenden Pressen und Erwärmen, vorzugsweise auch zum Halten der Temperatur und Abkühlen, als Durchlaufpresse/n, insbesondere als Doppelbandpresse/n, ausgebildet sind.

## Claims

1. Process for the production of a fire-resistant or fireproof laminate (86), comprising a core of a non-extrudable core mixture (24) consisting of a pourable, fireproof filling material and a binder, and cover strips (46, 48) bonded elastically to either side of the core, characterised in that, for the continuous production of the laminate (86) in one operation, the core mixture (24) is poured on to a lower flexible bonding sheet (16) feeding in in a supported manner, forming a pile extending over the entire width of the sheet, material of the core mixture (24) is drawn continuously and in a uniform manner through a wedge-shaped gap (40) between the lower bonding sheet and an upper flexible bonding sheet (30) also feeding in in a supported manner, where it is compacted for the first time and calibrated to thickness, the bonding sheets (16, 30) containing the precompacted core mixture (24) are bonded to the continuously supplied cover strips (46, 48) and the composite is pressed with further compaction, heated, cooled and cut to the final length of the laminate (86).

2. Process according to claim 1, characterised in that the unwound bonding sheets (16, 30) are each led through a means (18) for controlling the sheet tension in order to produce a constant sheet tension.

3. Process according to claim 1 or claim 2, characterised in that the bonding sheets (16, 30) and the cover strips (46, 48) are supplied in one operation.

4. Process according to one of claims 1 - 3, characterized in that the core mixture (24) available upstream of the wedge-shaped gap (40) is adjusted automatically in accordance with consumption.

5. Process according to one of claims 1 - 4, characterized in that a core mixture (24) consisting of 60 - 95 % by weight inorganic fillers and 5 - 40 % by weight of an organic or inorganic binder, preferably in granular or pasty form, is added, and cover strips (46, 48) of a metal or a fire-resistant plastic are stuck on.

6. Process according to one of claims 1 - 5, characterised in that low initial compaction is used in the case of a core mixture (24) with a small angle of rest or flowing pasty properties and higher initial compaction is used in the case of a core mixture with a larger angle of rest, the lower compaction being produced by means of a steeper entry angle (β) and/or at least one smaller radius (r_{1, 2}) of the boundary surface/s of the wedge-shaped gap, and the higher compaction being produced by means of a flatter entry angle (β) and/or at least one larger radius (r_{3, 4}) of the boundary surface/s of the wedge-shaped gap (40).

7. Device for carrying out the process according to one of claims 1 - 6, characterized in that it includes, in the feed direction (64) of the strips, respective reels (14, 28) with the lower and upper bonding sheets (16, 30), a spreader roll (20) and deflection rollers (22, 62) for each of the bonding sheets (16, 30), an apparatus for the uniform application of the core mixture (24) to the lower bonding sheet (16), first means for forming an adjustable entry angle (β) and the adjustable wedge-shaped gap (40) for the initial compaction of the core mixture (24) fed between the bonding sheets (16, 30), second means for supporting the lower bonding sheet (16) up to the compaction or tension rolls (42), third means for final pressing and heating and an apparatus for cutting the laminate (86) to the final length.

8. Device according to claim 7, characterized in that the first means for adjusting the wedge-shaped gap (40) consist of a rotatable knife bar (34) with a round, oval or triangular to hexagonal cross section, in the case of a polygonal cross section, preferably with a different radius of curvature (r) extending along each longitudinal edge, or a rotatable knife blade (35) with at least one rounded narrow longitudinal side and an approximately horizontally arranged knife table (26), wherein the knife bar (34) or the knife blade (35) and/or the knife table (26) are vertically adjustable and rotatable and can be fixed in any position and all of the sliding surfaces for the bonding sheets (16, 30) of the knife bar (34) or knife blade (35) and knife table (26) are coated with a sliding layer, preferably with tetrafluoroethylene.

9. Device according to claim 7, characterized in that the first means for adjusting the entry angle (β ) and the wedge-shaped gap (40) consist of an arrangement of bearing rollers (76), driving rollers (78), back-up rollers (74) and exchangeable feed rollers (72) forming the wedge-shaped gap (40), wherein said rollers are individually vertically and laterally adjustable and can preferably he driven by contact with one another.

10. Device according to claim 9, characterized in that two driven precompaction rolls (44) are arranged immediately downstream of the wedge-shaped gap (40), these further compacting the core mixture (24) and preferably driving the bearing rollers (76), back-up rollers (74) and feed rollers (72) via the non-driven driving rollers (78).

11. Device according to one of claims 7 - 10, characterized in that the second means for supporting the lower bonding sheet (16) are idlers (80, 84) and/or sliding tables (26, 82) situated closely alongside one another and preferably coated with polytetrafluoroethylene.

12. Device according to one of claims 7 - 10, characterized in that the third means for final pressing and heating, preferably also for maintaining the temperature and cooling, are designed as continuous press/es, particularly as twin-belt press/es.

## Revendications

1. Procédé pour fabriquer une plaque de stratifié résistante au feu ou incombustible (86), comportant un noyau constitué en un mélange de noyau non extrudable (24) constitué par un matériau de remplissage incombustible susceptible d'être versé et par un liant, et des bandes de couverture (46, 48) collées élastiquement au noyau,
caractérisé en ce que
pour la fabrication en continu de la plaque de stratifié (86) en un seul processus de travail, le mélange de noyau (24) est versé sur une feuille de collage inférieure (16) élastique en progression et supportée, et à cet endroit est formé un cône de versement s'étendant sur toute la largeur de la feuille, entre la feuille de collage inférieure et une feuille de collage élastique supérieure (30) également en progression et supportée, le matériau du mélange de noyau (24) est étiré en continu et régulièrement à travers une fente en coin (40) et y est comprimé une première fois et calibré en épaisseur, les feuilles de collage (16, 30) contenant le mélange de noyau précomprimé (24) sont collées aux bandes de couverture (46, 48) introduites en continu, et le stratifié est pressé par une autre compression, chauffé, refroidi et mis à la longueur de la dimension finale de la plaque de stratifié (86).

2. Procédé selon la revendication 1, caractérisé en ce que pour la production d'une tension constante dans les feuilles, les feuilles de collage déroulées (16, 30) sont menées chacune à travers un régulateur de tirage des feuilles (18).

3. Procédé selon l'une ou l'autre des revendications 1 et 2, caractérisé en ce que les feuilles de collage (16, 30) et les bandes de couverture (46, 48) sont introduites dans un passage.

4. Procédé selon l'une quelconque des revendications 1 à 3, caractérisé en ce que le mélange de noyau (24) en réserve avant la fente en coin (40) est compensé automatiquement en correspondance de la consommation.

5. Procédé selon l'une quelconque des revendications 1 à 4, caractérisé en ce qu'on alimente un mélange de noyau (24) qui est constitué par 60 à 95 % en poids de matériaux de remplissage inorganiques et par 5 à 40 % en poids de liant organique ou inorganique, de préférence sous forme granuleuse ou pâteuse, et en ce qu'on colle des bandes de couverture (46, 48) en métal ou en une matière plastique résistante au feu.

6. Procédé selon l'une quelconque des revendications 1 à 5, caractérisé en ce que pour un mélange de noyau (24) présentant un petit angle de versement ou des caractéristiques d'écoulement pâteux, on travaille avec une première compression faible, et pour un mélange de noyau présentant un angle de versement plus grand, on travaille avec une première compression plus élevée, la compression plus faible étant produite au moyen d'un angle d'introduction (β) plus raide et/ou au moyen d'au moins un rayon inférieur (r_{1,2}) des surfaces de délimitation de la fente en coin, et la compression plus élevée est produite au moyen d'un angle d'introduction plus faible (β) et/ou au moyen d'au moins un rayon supérieur (r_{3,4}) des surfaces de délimitation de la fente en coin (40).

7. Dispositif pour l'exécution du procédé selon l'une quelconque des revendications 1 à 6, caractérisé en ce que le dispositif comprend, en direction (64) de circulation des bandes, respectivement un dévidoir (14, 28) comportant les feuilles de collage inférieure et supérieure (16, 30), respectivement un rouleau élargisseur (20) et des rouleaux de renvoi (22, 62) pour les feuilles de collage (16, 30), un dispositif (36) pour déposer régulièrement le mélange de noyau (24) sur la feuille de collage inférieure (16), des premiers moyens pour former un angle d'introduction réglable (β) et la fente en coin réglable (40) pour la première compression du mélange de noyau (24) introduit entre les feuilles de collage (16, 30), des seconds moyens pour soutenir la feuille de collage inférieure (16) jusqu'aux rouleaux de compression ou de traction (42), et des troisièmes moyens pour le pressage et le réchauffement final, ainsi qu'un dispositif pour la mise à la longueur de la dimension finale de la plaque de stratifié (86).

8. Dispositif selon la revendication 7, caractérisé en ce que les premiers moyens pour régler la fente en coin (40) sont constitués par une poutre de raclage (34) en rotation, de section transversale ronde, ovale ou ayant de trois à six angles, dans le cas de sections transversales angulaires présentant de préférence des rayons d'arrondissement (r) différents s'étendant le long de chaque arête longitudinale, ou par une lame de raclage (35) en rotation présentant au moins un côté longitudinal étroit arrondi, et par une table de raclage (26) agencée de façon approximativement horizontale, la poutre de raclage (34) ou la lame de raclage (35) et/ou la table de raclage (26) étant réalisées de façon réglable en hauteur et rotatives, susceptibles d'être fixées dans chaque position, et toutes les surfaces de glissement pour les feuilles de collage (16, 30) de la poutre de raclage (34) ou de la lame de raclage (35) et de la table de raclage (26) étant revêtues d'une couche de glissement, de préférence de tétrafluoroéthylène.

9. Dispositif selon la revendication 7, caractérisé en ce que les premiers moyens pour régler l'angle d'introduction (β) et la fente en coin (40) sont constitués par un agencement de rouleaux de palier (76), de rouleaux d'entraînement (78), de rouleaux de soutien (74) et de rouleaux de dosage (72) échangeables formant la fente en coin (40), ces rouleaux étant individuellement réglables en direction horizontale et verticale et pouvant de préférence être entraînés par contact les uns avec les autres.

10. Dispositif selon la revendication 9, caractérisé en ce que deux rouleaux de précompression (44) entraînés sont agencés directement après la fente en coin (40), qui continuent à comprimer le mélange de noyau (24) et qui entraînent de préférence via les rouleaux d'entraînement (78) non entraînés les rouleaux de palier (76), les rouleaux de soutien (74) et les rouleaux de dosage (72).

11. Dispositif selon l'une quelconque des revendications 7 à 10, caractérisé en ce que les seconds moyens pour soutenir la feuille de collage inférieure (16) sont constitués par des rouleaux de roulement (80, 84) situés étroitement les uns à côté des autres et/ou par des tables de glissement (26, 82), revêtus de préférence de polytétrafluoroéthylène.

12. Dispositif selon l'une quelconque des revendications 7 à 10, caractérisé en ce que les troisièmes moyens pour le pressage et réchauffement final, de préférence également pour le maintien de la température et le refroidissement, sont réalisés en tant que presse(s) en continu, en particulier en tant que presse(s) à bande double.
